# EUROPEAN PATENT APPLICATION

(11) **EP 3 626 487 A1**
(43) Date of publication of application: **25.03.2020**
(21) Application number: 18196099.8
(22) Date of filing: 21.09.2018
(51) Int. Cl.: B60G 21/05, B60G 11/08, B60G 11/12, B60G 7/00

(54) **A SUSPENSION FOR A MOTOR VEHICLE, PARTICULARLY A REAR SUSPENSION**

(71) Applicant: FCA Italy S.p.A., 10135 Torino (IT)
(72) Inventor: SCANTAMBURLO, Mr. Dario, I-10135 Torino (IT); GAIDO, Mr. Giuseppe, I-10135 Torino (IT); PAVESIO, Mr. Carlo, I-10135 Torino (IT); SANDRI, Mr. Silvano, I-10135 Torino (IT)
(74) Representative: De Bonis, Paolo

(57) **Abstract**

Described herein is a suspension (1) of the twist-beam type for a motor vehicle. Instead of the traditional cylindrical helical springs functioning as elastic element, the suspension (1) comprises an elastic lamina element (8), the ends of which (82, 84) are connected to the longitudinal arms of the suspension (2, 4) and which is moreover fixed to the frame of the motor vehicle. The elastic lamina element (8) fulfils both the function of elastic element of the suspension and the function of anti-roll element.

## Description

### TEXT OF THE DESCRIPTION

### Field of the invention

The present invention relates to suspensions for motor vehicles, in particular to rear suspensions of the twist-beam type.

### Prior art

Twist-beam rear suspensions are today very widespread thanks to the good compromise that they afford between performance and production cost.

A twist-beam suspension typically comprises a first longitudinal arm and a second longitudinal arm, which are articulated to the frame of the motor vehicle and each have a first end and a second end.

A transverse twisting element, typically a C-section and/or tubular-section cross member, is set transversely with respect to the longitudinal arms and connects the latter in a position between the respective first and second ends.

A first shock-absorber and a second shock-absorber are then connected at the second ends of the longitudinal arms and bear upon the body of the vehicle or else upon the subframe that carries the twist beam, whereas a first spring and a second spring are connected to the longitudinal arms in a position comprised between the first and second ends, which at times coincides with the position of the twisting element. The springs are moreover configured for bearing upon the body of the motor vehicle either directly or by interposition of a subframe.

The suspension is then completed by an anti-roll bar, which extends straddling the transverse twisting element and has its ends constrained to the longitudinal arms.

This solution, albeit very widespread and fundamentally optimised from the standpoint of costs, is, however, characterised by a substantial immutability of configuration.

In particular, is substantially impracticable to carry out any regulation, for example as regards stiffness of the elastic elements of the suspension, and adjustment of the height from the ground.

Moreover, adoption of an anti-roll bar separate from the components referred to above complicates to a certain extent production of the suspension and installation thereof on the vehicle.

### Object of the invention

The object of the present invention is to solve the technical problems mentioned previously.

In particular, the object of the present invention is to provide a suspension for a motor vehicle that presents high vertical compactness, in particular a twist-beam suspension, in which it is possible to regulate some parameters of the suspension itself, such as the stiffness of the elastic elements and the height from the ground, and possibly eliminate the anti-roll bar. Moreover, a further object of the present invention is to provide a suspension in which possible installation of components for transmitting motion to the respective wheels is facilitated.

### Summary of the invention

The object of the present invention is achieved by a suspension having the features forming the subject of the ensuing claims, which form an integral part of the technical disclosure provided herein in relation to the invention.

### Brief description of the figures

The invention will now be described with reference to the annexed figures, which are provided purely by way of non-limiting example and in which:
- Figure 1 is a perspective view of a suspension for a motor vehicle according to the invention;

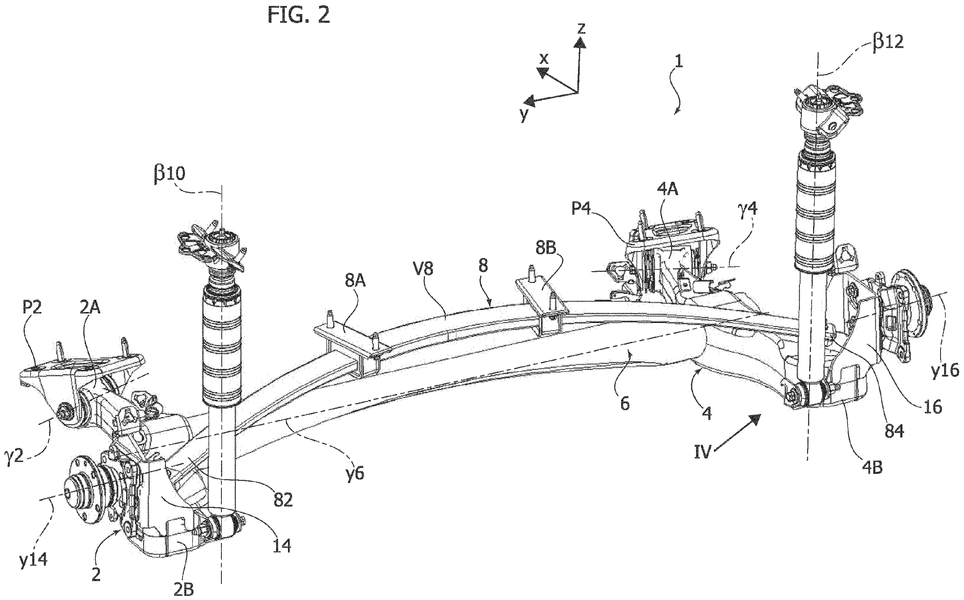

- Figure 2 is a perspective view according to the arrow II of Figure 1;
- Figure 3 is a top plan view according to the arrow III of Figure 1;

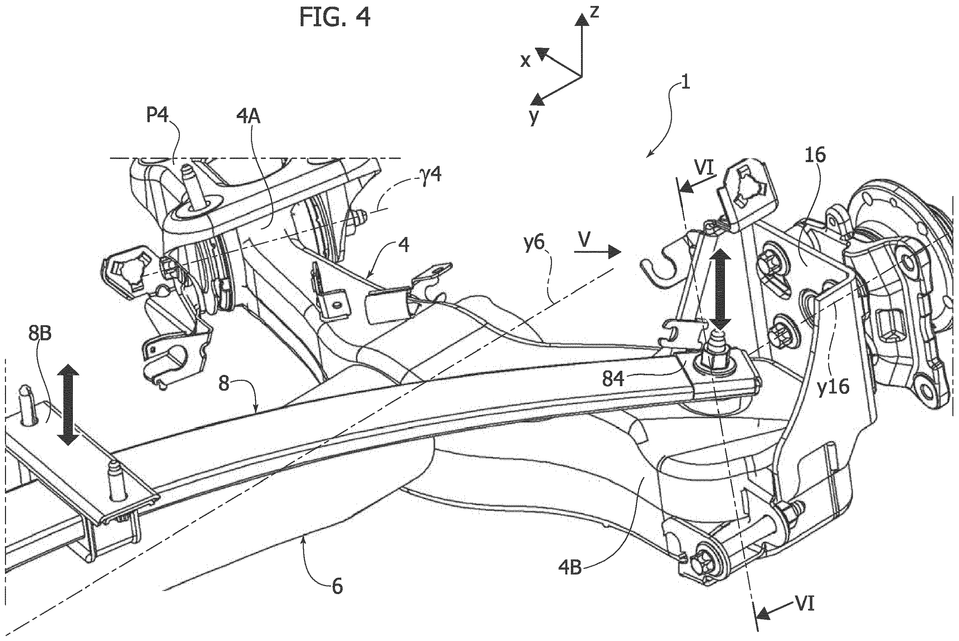

- Figure 4 is a partial perspective view according to the arrow IV of Figure 2;

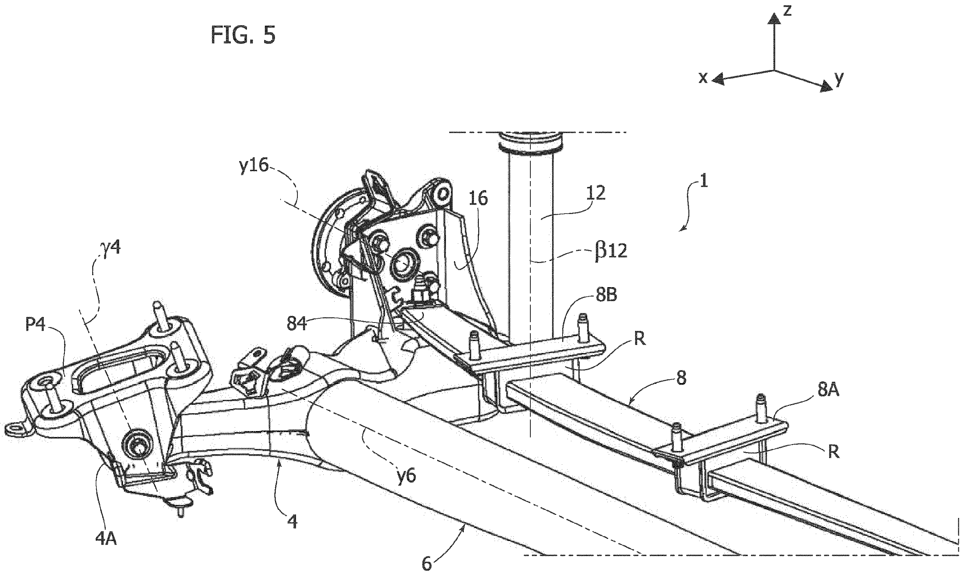

- Figure 5 is a partial perspective view according to the arrow V of Figure 4;
- Figure 6 is a partially sectioned view according to the line of trace VI-VI of Figure 4; and
- Figure 7 is a schematic view illustrating a feature of the suspension according to the invention.

### Detailed description

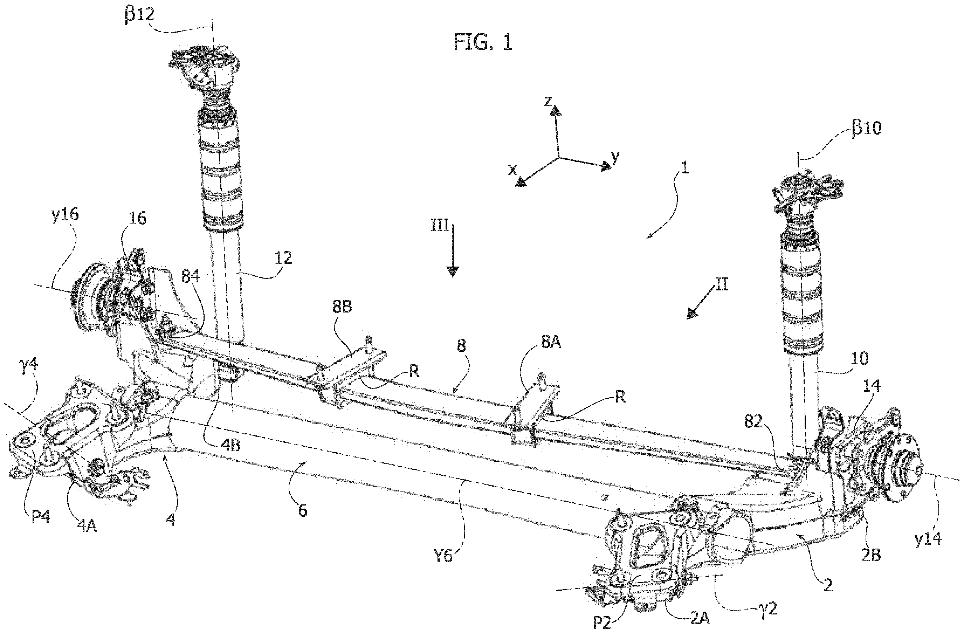

The reference number 1 in Figure 1 and in the subsequent figures designates as a whole a suspension for a motor vehicle according to the invention. The suspension 1 is of the twist-beam type and comprises a first longitudinal arm 2, a second longitudinal arm 4, and a twisting element 6 set transversely so as to connect the first longitudinal arm 2 and the second longitudinal arm 4. The cartesian reference system for the present description is illustrated in each of the figures and defines a longitudinal direction X, a transverse direction Y, and a vertical direction Z.

The element 6 is a twisting element of the suspension and develops along a transverse axis Y6, and is generally provided as a C-section element or a hollow tubular element. The first longitudinal arm 2 comprises a first end 2A and a second end 2B, whereas the second longitudinal arm 4 comprises a first end 4A and a second end 4B. The first ends 2A, 4A of the longitudinal arms 2, 4 are configured for articulated connection to a frame of the vehicle, in particular to a underbody thereof via hinging to a connection plate P2, P4, respectively. The axes of articulation are designated by the references γ2 and γ4, and a hinge is provided for articulation about the aforesaid axes, with interposition of an elastomeric bushing. References different from X, Y, Z for designating an axis are used here in the case where the orientation of the axis in question is not aligned with any of the three directions (X-Y-Z) of the reference system.

As may be seen in the figures, the twisting element 6 is set so as to connect the arms 2, 4 in a position between the first end and the second end of each of them. The scheme of constraint of the twisting element 6 to the longitudinal arms 2, 4 is that of a rigid connection. As represented in the figures, each of the longitudinal arms 2, 4 comprises an area of interface in which the twisting element 6 is positioned and fixed.

According to the invention, the suspension 1 comprises an elastic lamina element 8 comprising a first end 82 and a second end 84, where the first end 82 is connected to the longitudinal arm 2 at its second end 2B, whereas the second free end 84 is connected to the longitudinal arm 4 at its second end 4B. The elastic element 8 is preferably made of steel or else of composite material.

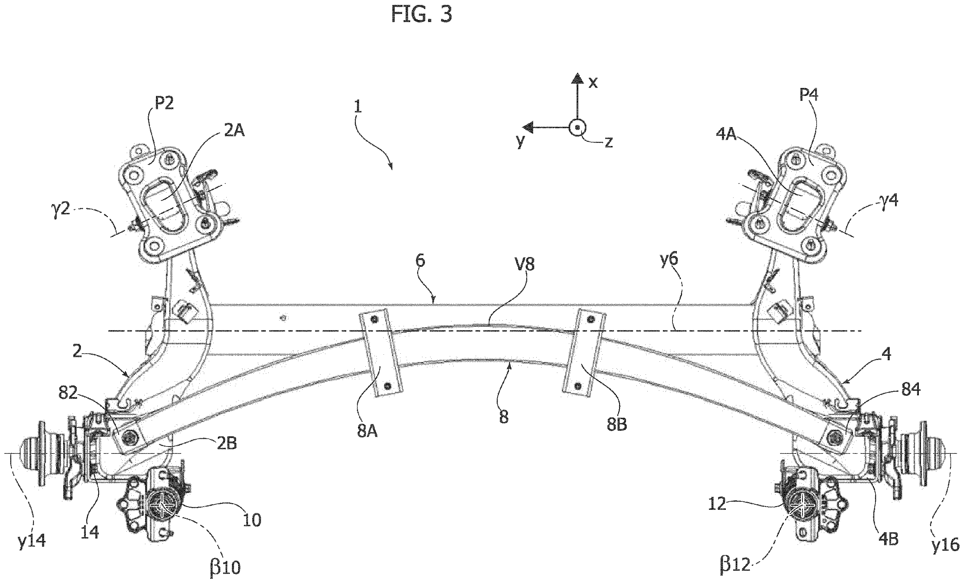

Located between the ends 82 and 84 is a middle sector V8 (preferably symmetrical with respect to the median plane XZ), which is located, with respect to the longitudinal arms 2, 4, in a position comprised between the respective first end 2A, 4A and the respective second end 2B, 4B. Moreover, in the preferred embodiment illustrated herein - where the elastic lamina element 8 has a curved shape - the middle sector V8 is located - with reference to the top plan view of Figure 3 - at a distance from the twisting element 6 with respect to the axis Y6, and in particular in a position chosen according to performance targets set in the design stage.

This means that the position of the middle sector V8 can vary according to the requirements, the shape of the elastic element 8, and/or the curvature of the latter.

The elastic element 8 has preferably a curved, arched or boomerang, shape (as in the preferred embodiment illustrated in the figures), but in some embodiments it is possible to use an elastic element 8 with a pure circular shape, or again an elastic element 8 with a parabolic shape, or else even a rectilinear shape. In general, according to the requirements, any curved (or non-curved) shape may be adopted that will guarantee characteristics of stiffness compatible with the requirements of design.

Straddling the middle sector V8, and arranged once again in a position comprised between the ends 82 and 84, are a first supporting element 8A and a second supporting element 8B, which are fitted, like a belt loop, on the elastic element 8 and are each configured for fixing the elastic element 8 to a frame of the motor vehicle, in particular to an underbody thereof. Each supporting element 8A, 8B is provided with an internal annular element R made of elastomeric material, which constitutes the interface with the elastic element 8 and dampens the vibrations thereof at the interface itself. Moreover, each bushing element 8A, 8B is provided with a fixing plate FP that enables connection thereof to the frame of the motor vehicle, in particular to an underbody thereof.

In the preferred embodiment of the figures, the supporting elements are two for each elastic lamina element 8, arranged on opposite sides of the sector V8 and each comprised between the sector V8 and the corresponding end 82 (element 8A) or else 84 (element 8B), but embodiments are in general possible in which the elastic lamina element 8 is fixed to the frame of the motor vehicle by means of a single supporting element located in a position corresponding to the sector V8.

Moreover forming part of the suspension 1 are, all fixed at the second ends 2B and 4B, a first shock-absorber 10 and a second shock-absorber 12, which have a substantially vertical orientation with axes β10 and β12 (the orientation may be purely vertical or not, according to the points of articulation of the suspension to the frame of the vehicle), as well as a first hub carrier 14 and a second hub carrier 16, which support a first idle hub and a second idle hub, which are rotatable about the axes Y14 and Y16 and be connected to driven wheels of the motor vehicle.

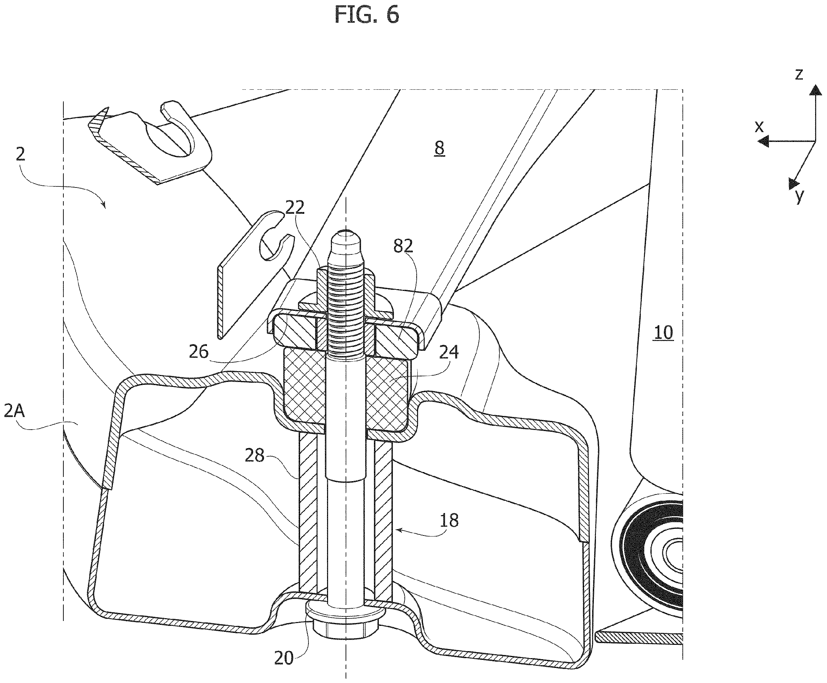

According to an advantageous aspect of the invention (Figure 6), the ends 82 and 84 of the elastic element 8 are connected at the second ends 2B and 4B by means of an elastic joint or articulation designated by the reference number 18. The ensuing description is developed for just the longitudinal arm 2, but applies indifferently to the other longitudinal arm 4.

The elastic joint or articulation 18 comprises a screw 20, the head of which bears upon an outer bottom surface of the respective longitudinal arm 2, 4, and a nut 22, which engages a threaded end of the screw opposite to the one where the head is located and bears upon the ends 82 and 84 of the elastic element 8.

Set between each end 82 and 84 and a top surface of the arm 2 is a bushing 24 made of elastomeric material, whereas preferably set between each end 82 and 84 and the nut 22 is a C-shaped plate 26 that is set straddling the ends 82 and 84 themselves.

Preferably, each of the aforesaid first longitudinal arm 2 and second longitudinal arm 4 is hollow in so far as it is provided as a box-like element or stamped element, so that each joint 18 comprises a spacer 28 fitted on the screw 20 at a portion thereof located within the respective longitudinal arm 2, 4 and bearing upon opposite inner surfaces of the respective longitudinal arm 2, 4. The spacer 28 prevents structural collapse of the metal sheets of the arm 2, 4 when the joint 18 is tightened. It is to be borne in mind, however, that the joint 18 may be provided also on longitudinal arms obtained by casting, i.e., as massive, non-hollow components. In this case, while still envisaging provision of the nut 22, of the bushing 24, and possibly of the plate 26, the spacer 28 is dispensed with in so far as it is not necessary.

It should be noted that in general the position of the head of the screw 20 and of the nut 22 may be reversed. In general, each elastic joint 18 comprises:
- the screw 20, which passes through the corresponding first longitudinal arm 2 or second longitudinal arm 4, where the screw 20 bears upon a first outer surface of the corresponding longitudinal arm 2, 4;
- the bushing made of elastomeric material 24 fitted on the screw 20 and bearing upon a second outer surface of the corresponding longitudinal arm 2, 4, opposite to the first outer surface; and
- the nut 22 engaged on the screw 20 and gripping the corresponding first end 82 or second end 84 of the elastic lamina element 8 on the bushing made of elastomeric material 24, thus tightening the joint 18.

Operation of the suspension 1 is described in what follows.

Generally, the suspension 1 operates like a conventional twist-beam suspension: shaking of the longitudinal arms 2, 4 generates a torsion of the element 6, which in turn generates an elastic structural response. In particular, the elastic response of the twisting element 6 is the composition of a torsional contribution and a flexural contribution. The torsional contribution is predominant in terms of elastic deformation, given the relatively low torsional stiffness of the element 6, whereas the flexural contribution is small in terms of deformation, given that the flexural stiffness of the element 6 is higher than the torsional stiffness so as to prevent significant variations of camber between the wheels in the event of asymmetrical shaking.

The elastic lamina element 8 performs both the functions normally performed by the helical springs associated to each longitudinal arm 2, 4, and the functions of an anti-roll bar.

Given that the elastic element 8 is constrained to the frame of the motor vehicle by means of the supporting elements 8A and 8B, it reacts both to (symmetrical and asymmetrical) vertical shaking of each of the longitudinal arms 2, 4 and to transfer of load of the vehicle, thus limiting the roll thereof. Hence, the elastic element 8 performs the functions that are normally exclusive feature (in a separate way) of the elastic elements (springs) of the suspension and of the anti-roll bar.

Provision of the joints 18 at the ends 2B and 4B, as likewise provision of the supporting elements 8A and 8B, moreover enables some regulations of the suspension 1 to be made that are generally not allowed in twist-beam suspensions of a conventional type.

For instance, by varying the thickness of the bushing 24 or else by interposing a spacer between the latter and the corresponding end 82 and 84, it is possible to vary the point of connection between the elastic element 8 and arms 2, 4 in the vertical direction Z, thus varying the height of the vehicle from the ground in a very simple way, and without any need for replacement of critical components of the suspension, as would happen, instead, in twist-beam suspensions of a conventional type, where this operation would require replacement of the springs with springs having a different axial length and/or replacement of the reaction plates of the springs.

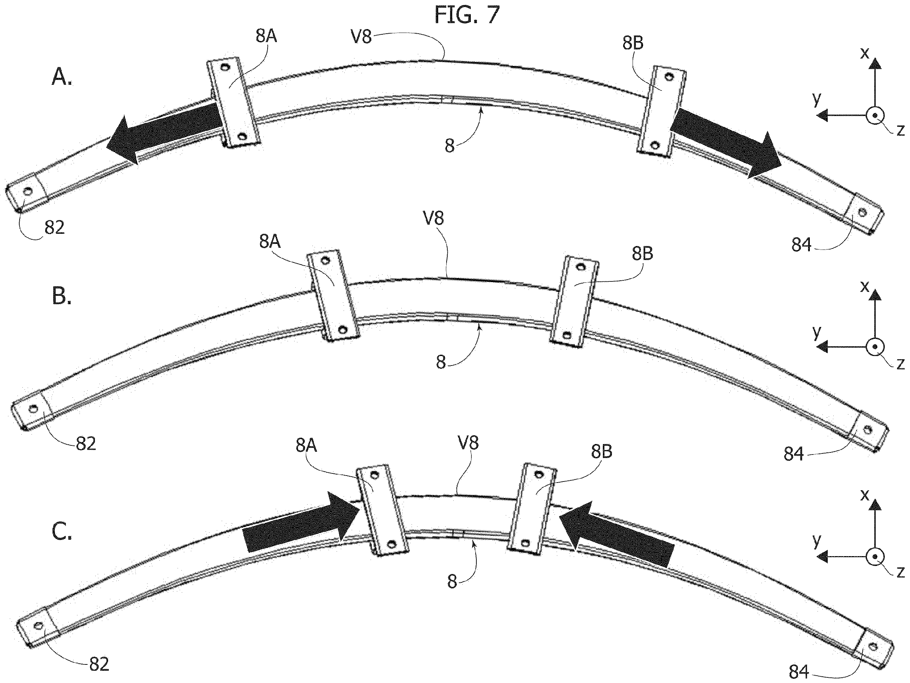

Moreover, with reference to Figure 7, according to an advantageous aspect of the invention, the supporting elements 8A and 8B may be rendered movable along the elastic lamina element 8, thus enabling variation of the centre-to-centre distance thereof in a transverse direction Y and consequently of the stiffness.

For this purpose, Figure 7 is formed by three parts A, B, C, where represented in part B is a condition where the elements 8A and 8B are in a reference condition, or a condition of zero regulation, whereas parts A and C represent conditions of regulation of maximum flexural stiffness and minimum flexural stiffness, respectively, of the elastic element 8, as this affects the longitudinal arms 2, 4.

In particular, in the condition illustrated in Figure 7A, the free length of deflection of the elastic element 8 with respect to the ends 82 and 84 is minimum, consequently giving rise to higher values of flexural stiffness. On account of positioning of the elastic element 8 with respect to the suspension 1, it is precisely the values of flexural stiffness of the free sections of the element 8 external to the supporting elements 8A and 8B (which have a position not depending upon shaking) that determine the elastic stiffness of the suspension in regard to shaking.

Instead, in the condition of Figure 7C, the free length of the sections of the elastic element 8 external to the supporting elements 8A and 8B (i.e., the free length of deflection at the ends 82 and 84) is maximum, thus giving rise to values of flexural stiffness lower than in the case of Figure 7A.

Once again with reference to Figure 7, the position of the supporting elements 8A and 8B can be adjusted in a discrete way and manually by providing separate fixing kits on the underbody of the vehicle, but movement thereof may also be automated by means of linear actuators that act upon the supporting elements themselves.

In these latter embodiments, it is preferable for the surfaces of contact of the annular elastomeric gaskets R of each supporting element 8A, 8B to be treated with a low-friction coating to prevent sticking of the system.

In other embodiments, the pair of supporting elements 8A and 8B may still be present, but they are fixed and cannot be regulated along the element 8.

In yet further embodiments, it is possible to provide a single supporting element located in a position corresponding to the middle sector V8, and also in this case the supporting element has - here, for all the more reason - a non-adjustable position.

The person skilled in the branch will appreciate how the suspension 1 according to the invention enables optimisation of production of a twist-beam suspension of a known type, affording the possibility of eliminating the anti-roll bar, and likewise eliminating the need to provide attachments and supports for the cylindrical helical springs. Of course, it is anyway possible, in the case where the application so requires, to introduce an anti-roll bar proper, the action of which adds to that of the element 8. This solution may be convenient in the case where the design targets as regards roll of the vehicle are very ambitious and would require an almost exaggerated sizing of the elastic element 8. Moreover, the structure of the suspension 1 affords a lot of space - as compared to known suspensions - on account of the possible installation of a motion-transmission line (transmission shaft, differential, and axle shafts) that transmits the motion to the rear wheels.

Thanks then to provision of the elastic element 8, it is possible to carry out with extreme simplicity regulations of height from the floor and - above all - regulations of stiffness of the suspension, without intervening in a massive way and/or on critical components of the suspension itself.

Of course, the details of construction and the embodiments may vary widely with respect to what has been described and illustrated herein, without thereby departing from the scope of the present invention, as defined by the annexed claims.

## Claims

1. A suspension (1) for a motor vehicle, in particular a rear suspension, comprising:
- a first longitudinal arm (2) having a first end (2A) and a second end (2B);
- a second longitudinal arm (4) having a first end (4A) and a second end (4B); and
- a twisting element (6) set transversely so as to connect said first longitudinal arm (2) and said second longitudinal arm (4), the twisting element (6) being connected to the first longitudinal arm (2) and to the second longitudinal arm (4) in a position comprised between the respective first end (2A, 4A) and second end (2B, 4B),
wherein:
- the first ends (2A, 4A) of said first longitudinal arm (2) and second longitudinal arm (4) are configured for articulated connection to a motor-vehicle frame; and
- a first shock-absorber (10) is connected at the second end (2B) of the first longitudinal arm, and a second shock-absorber (12) is connected at the second end (4B) of the second longitudinal arm (4),
the suspension (1) being **characterised in that**:
it comprises an elastic lamina element (8) comprising a first end (82) connected to said first longitudinal arm (2), a second end (84) connected to said second longitudinal arm (4), and a middle sector (V8) set between the first end (82) and the second end (84); and
said elastic lamina element (8) comprises one or more supporting elements (8A, 8B) fitted thereon and each configured for connection of the elastic lamina element (8) to a motor-vehicle frame.

2. The suspension (1) for motor vehicle according to Claim 1, wherein said elastic lamina element (8) has a curved shape.

3. The suspension (1) for motor vehicle according to Claim 1 or Claim 2, comprising a pair of supporting elements (8A, 8B) fitted on said elastic lamina element (8) on opposite sides with respect to said middle sector (V8).

4. The suspension (1) for motor vehicle according to Claim 3, wherein each supporting element (8A, 8B) is fitted on said elastic lamina element (8) by means of an annular element made of elastomeric material (R).

5. The suspension (1) for motor vehicle according to Claim 3 or Claim 4, wherein each supporting element (8A, 8B) comprises a fixing plate (P) for coupling to a motor-vehicle frame, in particular to an underbody thereof.

6. The suspension (1) for motor vehicle according to Claim 1, wherein the first end (82) and the second end (84) of the elastic lamina element (8) are connected, respectively, to the first longitudinal arm (2) and to the second longitudinal arm (4) by means of an elastic joint (18).

7. The suspension according to Claim 6, wherein each elastic joint (18) comprises:
- a screw (20) passing through the corresponding first longitudinal arm (2) or second longitudinal arm (4), said screw (20) bearing upon a first outer surface of the corresponding longitudinal arm (2, 4);
- a bushing made of elastomeric material (24) fitted on said screw (20) and bearing upon a second outer surface of said corresponding longitudinal arm (2, 4), opposite to said first outer surface; and
- a nut (22) engaged on said screw (20) and gripping the corresponding first end (82) or second end (84) of the elastic lamina element (8) on said bushing made of elastomeric material (24), thus tightening the elastic joint (18).

8. The suspension (1) for motor vehicle according to Claim 7, wherein each of said first and second longitudinal arms (2, 4) is hollow, and wherein each elastic joint comprises a spacer (28) fitted on said screw (20) at a portion thereof located within the respective longitudinal arm (2, 4) and bearing upon opposite inner surfaces of the respective longitudinal arm (2, 4).

9. The suspension (1) for motor vehicle according to any one of Claims 3, 4, and 5, wherein said pair of supporting elements (8A, 8B) are mobile along said elastic lamina element (8).

10. The suspension (1) for motor vehicle according to Claim 1, wherein said middle sector (V8) is located, with respect to said first and second longitudinal arms (2, 4) in a position comprised between the respective first ends (2A, 4A) and second ends (2B, 4B).

11. The suspension (1) for motor vehicle according to Claim 1, wherein said elastic lamina element (8) has a rectilinear shape.
